# EUROPÄISCHE PATENTANMELDUNG

(11) **EP 4 210 204 A1**
(43) Veröffentlichungstag der Anmeldung: **12.07.2023**
(21) Anmeldenummer: 22150653.8
(22) Anmeldetag: 10.01.2022
(51) Int. Cl.: H02K 5/22, H02K 11/33, H01R 13/11

(54) **ELEKTRISCHER ANTRIEB FÜR EIN FAHRZEUG**

(71) Anmelder: Valeo eAutomotive Germany GmbH, 91056 Erlangen (DE)
(72) Erfinder: Noe, Benedikt, 97616 Bad Neustadt a.d.Saale (DE); Spirk, Daniel, 97616 Bad Neustadt a.d.Saale (DE)
(74) Vertreter: Valeo Powertrain Systems

(57) **Zusammenfassung**

Elektrischer Antrieb (1) für ein Fahrzeug (2), aufweisend:
- eine elektrische Maschine (3) mit einer Statorwicklung (4);
- einen Stromrichter (5);
- eine erste Stromschiene (7), die elektrisch leitfähig mit der Statorwicklung (4) verbunden ist und ein der elektrischen Maschine (3) abgewandtes erstes freies Stromschienenende (9a) aufweist;
- eine zweite Stromschiene (8), die elektrisch leitfähig dem Stromrichter (5) verbunden ist und ein dem Stromrichter (5) abgewandtes zweites freies Stromschienenende (9b) aufweist; und
- eine Verbindungsvorrichtung (11), innerhalb welcher das erste freie Stromschienenende (9a) und das zweite freie Stromschienenende (9b) angeordnet sind, sodass die Statorwicklung (4) und der Stromrichter (5) elektrisch leitfähig miteinander verbunden sind;
wobei das erste freie Stromschienenende (9a) und das zweite freie Stromschienenende (9b) mittels einer durch elastische Verformung der Verbindungsvorrichtung (11) ausgeübten Rückstellkraft innerhalb der Verbindungsvorrichtung (11) gehaltert sind.

## Beschreibung

Die vorliegende Erfindung betrifft einen elektrischen Antrieb für ein Fahrzeug, aufweisend: eine elektrische Maschine mit einer Statorwicklung; einen Stromrichter; eine erste Stromschiene, die elektrisch leitfähig mit der Statorwicklung verbunden ist und ein der elektrischen Maschine abgewandtes erstes freies Stromschienenende aufweist; eine zweite Stromschiene, die elektrisch leitfähig dem Stromrichter verbunden ist und ein dem Stromrichter abgewandtes zweites freies Stromschienenende aufweist; und eine Verbindungsvorrichtung, innerhalb welcher das erste freie Stromschienenende und das zweite freie Stromschienenende angeordnet sind, sodass die Statorwicklung und der Stromrichter elektrisch leitfähig miteinander verbunden sind.

In elektrischen Antrieben für Fahrzeug sind regelmäßig eine elektrische Maschine mit einer Statorwicklung und ein Stromrichter vorgesehen, der die elektrische elektrisch versorgt. Die elektrischen Verbindungen zwischen der elektrischen Maschine und dem Stromrichter werden wegen ihrer hohen Stromtragefähigkeit dabei häufig durch Stromschienen ausgebildet. Wenn sich sowohl von der elektrischen Maschine als auch vom Stromrichter aus jeweils eine Stromschiene erstreckt, sind diese mittels einer Verbindungsvorrichtung elektrisch leitfähig und mechanisch zu verbinden.

Der Erfindung liegt die Aufgabe zugrunde, eine fertigungsfreundliche Möglichkeit zum mechanischen Verbinden zweier Stromschienen zwischen einer elektrischen Maschine und einem Stromrichter anzugeben.

Diese Aufgabe wird erfindungsgemäß bei einem elektrischen Antrieb der eingangs genannten Art dadurch gelöst, dass das erste freie Stromschienenende und das zweite freie Stromschienenende mittels einer durch elastische Verformung der Verbindungsvorrichtung ausgeübten Rückstellkraft innerhalb der Verbindungsvorrichtung gehaltert sind.

Der erfindungsgemäße elektrische Antrieb für ein Fahrzeug weist eine elektrische Maschine auf. Die elektrische Maschine weist eine Statorwicklung auf. Der Antrieb weist ferner einen Stromrichter auf. Der Antrieb weist ferner eine erste Stromschiene auf. Die erste Stromschiene ist elektrisch leitfähig mit der Statorwicklung verbunden. Die erste Stromschiene weist ein der elektrischen Maschine abgewandtes erstes freies Stromschienenende auf. Der Antrieb weist ferner eine zweite Stromschiene auf. Die zweite Stromschiene ist elektrisch leitfähig dem Stromrichter verbunden. Die zweite Stromschiene weist ein dem Stromrichter abgewandtes zweites freies Stromschienenende auf. Der Antrieb weist ferner eine Verbindungsvorrichtung auf. Innerhalb der Verbindungsvorrichtung sind das erste freie Stromschienenende und das zweite freie Stromschienenende angeordnet sind, sodass die Statorwicklung und dem Stromrichter elektrisch leitfähig miteinander verbunden sind. Das erste freie Stromschienenende und das zweite freie Stromschienenende sind mittels einer durch elastische Verformung der Verbindungsvorrichtung ausgeübten Rückstellkraft innerhalb der Verbindungsvorrichtung gehaltert.

Die Stromschienen des erfindungsgemäßen Antriebs sind vorteilhafterweise einfach durch die Verbindungsvorrichtung, insbesondere ohne besondere Werkzeuge, elektrisch und mechanisch miteinander verbindbar. Dies erleichtert die Montage des elektrischen Antriebs, sodass ein besonders fertigungsfreundlicher Antrieb vorgeschlagen wird. Die Verbindungsvorrichtung ist kann ferner bauteilarm ausgebildet werden, was die Kosten reduziert. Fern kann auch auf Schrauben verzichtet werden, die wegen der Wärmeausdehnung des Kupfers kritisch sind. Die Verbindungsvorrichtung leistet auch einen hervorragenden Toleranzausgleich zwischen den Stromschienen.

Die elektrische Maschine ist insbesondere eine rotierende elektrische Maschine. Vorzugweise ist die elektrische Maschine eine, insbesondere permanent oder elektrisch erregte, Synchronmaschine. Die elektrische Maschine kann auch eine Asynchronmaschine sein. Der Stromrichter ist vorzugsweise ein Wechselrichter, der dazu eingerichtet ist, eine Gleichspannung, insbesondere eine Batteriespannung, in eine Wechselspannung zum Versorgen der elektrischen Maschine zu wandeln. Der elektrische Antrieb kann auch eine die Gleichspannung bereitstellende Batterie, insbesondere mit einer Nennspannung von wenigstens 400 Volt, bevorzugt wenigstens 600 Volt, aufweisen. Die erste und/oder die zweite Stromscheine weisen vorzugsweise entlang ihrer Stromflussrichtung eine rechteckige Querschnittsfläche auf. Bevorzugt sind die Stromschienen nicht biegeschlaff. Ein weiteres freies Stromschienenende der ersten Stromschiene ist vorzugsweise elektrisch leitfähig und/oder mechanisch mit der Statorwicklung verbunden. Ein weiteres freies Stromschienenende der zweiten Stromschiene ist vorzugsweise elektrisch leitfähig und/oder mechanisch mit dem Stromrichter verbunden.

Die Statorwicklung ist vorzugsweise als Haarnadelwicklung aus einer Vielzahl von Formleitern gebildet. Dabei kann die erste Stromschiene als Verlängerung eines der Formleiter ausgebildet sein oder mit einem Formleiter verbunden sein. Der Formleiter kann ein I-Pin sein.

Bei dem erfindungsgemäßen Stromrichter ist bevorzugt vorgesehen, dass die Verbindungsvorrichtung einen Aufnahmeabschnitt und eine Öffnung, durch welche das erste freie Stromschienenende in den Aufnahmeabschnitt eingeführt ist, aufweist und die erste Stromschiene einen ersten innenliegenden Abschnitt aufweist, der sich vom ersten freien Stromschienenende bis zur Öffnung erstreckt. Der Aufnahmeabschnitt kann den innenliegenden Abschnitt dabei in wenigstens zweier Raumrichtungen umgeben.

Vorzugsweise ist vorgesehen, dass das zweite freie Stromschienenende durch die Öffnung in den Aufnahmeabschnitt eingeführt ist und die zweite Stromschiene einen zweiten innenliegenden Abschnitt aufweist, der sich vom zweiten freien Stromschienenende bis zur Öffnung erstreckt, wobei der erste innenliegende Abschnitt und der zweite innenliegende Abschnitt im Aufnahmeabschnitt parallel zueinander verlaufen. Der Aufnahmeabschnitt kann dabei als gemeinsamer, durch die Öffnung zugänglicher Aufnahmeabschnitt für den ersten innenliegenden Abschnitt und den zweiten innenliegenden Abschnitt ausgebildet sein.

In Weiterbildung kann vorgesehen sein, dass der erste innenliegende Abschnitt eine erste Seite und der zweite innenliegende Abschnitt eine zweite Seite, die mit der ersten Seite eine erste Ebene aufspannt, aufweist, wobei die Verbindungsvorrichtung ein Rückstellelement aufweist, welches die erste Seite und die zweite Seite berührt, welches die elastische Verformung aufweist und welches die Rückstellkraft auf den ersten innenliegenden Abschnitt und den zweiten innenliegenden Abschnitt ausübt. Das Rückstellelement kann so beispielsweise als gemeinsames Rückstellelement ausgebildet sein.

In konkreter Ausgestaltung ist es bevorzugt, wenn die Verbindungsvorrichtung eine Klemme aufweist, welche eine Basisfläche mit einem ersten Basisflächenende und einem zweiten Basisflächenende, eine Zunge, die das Rückstellelement umfasst, eine Umbiegung, die das erste Basisflächenende mit der Zunge verbindet, und eine Lasche, die am zweiten Basisflächenende aufgebogen ist, durch welche die Zunge durchgeführt ist und welche zusammen mit der Basisfläche und der Zunge die Öffnung begrenzt, aufweist. Die Basisfläche, die Zunge und die Umbiegung können den Aufnahmeabschnitt begrenzen. Vorzugsweise ist in der Zunge, insbesondere durch Biegen, eine Nase ausgebildet, welche die erste Seite und die zweite Seite berührt. Über die Basisfläche kann die elektrisch leitfähige Verbindung der Stromschienen hergestellt sein. Die Klemme ist hier bevorzugt aus einem Metallblech ausgebildet.

Es ist dabei nicht zwingend erforderlich, dass die Stromschienenenden an die Umbiegung anschlagen, sodass ein Toleranzausgleich bei unterschiedlichen Längen der Stromschienen möglich ist. Insoweit erfolgt die elektrische leitfähige Verbindung zwischen den Stromschienen vor allem über die Basisfläche.

Die Zunge kann einen von der Umbiegung aus gesehen jenseits der Öffnung liegenden Zungenendabschnitt aufweisen, der zu den Stromschienen hingebogen ist und dazu eingerichtet ist, sich bei einem Herausziehen der Stromschienen aus der Verbindungsvorrichtung in die Stromschienen einzuschneiden und dadurch ein Herausziehen der Stromschienen aus der Verbindungsvorrichtung zu hemmen. Dazu kann der Zungenendabschnitt eine entgegen einer Richtung des Herausziehens wirkende zusätzlich Kraft auf die Stromschienen ausüben. Der Zungenendabschnitt kann außerdem zusätzlich zum Rückstellelement die Rückstellkraft ausüben und/oder die elastische Verformung aufweisen. Der Zungenendabschnitt kann insoweit auch als weiteres Rückstellelement aufgefasst werden. Dadurch kann eine zusätzliche Stabilisierung der Stromschienen in der Verbindungsvorrichtung erzielt werden. Insbesondere kann ein Verkippen der Stromschienen und ein daraus resultierender Kontaktverlust vermieden werden.

In der Umbiegung kann ferner eine Ausnehmung ausgebildet sein, die Durchführung der Stromschienenenden ermöglicht. Dadurch können die Übergänge von der Basisfläche in die Umbiegung und/oder von der Umbiegung in die Zunge mit größeren Biegeradien ausgebildet werden, ohne eine Kollision der Stromschienenenden mit den Biegeradien zu verursachen.

Außerdem kann vorgesehen sein, dass der erste innenliegende Abschnitt eine dritte Seite aufweist und der zweite innenliegende Abschnitt eine vierte Seite, die mit der dritten Seite eine zu der ersten Ebene parallele zweite Ebene aufspannt, aufweist. Die Verbindungsvorrichtung kann dann ein weiteres Rückstellelement aufweisen, welches eine Rückstellkraft auf die dritte Seite und die vierte Seite ausübt, um eine elektrische Kontaktfläche mit der dritten Seite und der vierten Seite herzustellen. Das weitere Rückstellelement ist bevorzugt durch die Basisfläche ausgebildet. Das weitere Rückstellelement kann dazu eingerichtet sein, sich in den Aufnahmeraum zu wölben, wenn die Stromschienen aus dem Aufnahmeraum entfernt werden und durch Einführen der Stromschienen in den Aufnahmeraum gerade gedrückt werden.

Gemäß einer alternativen Ausgestaltung kann vorgesehen sein, dass die Verbindungsvorrichtung eine von der ersten Öffnung getrennte zweite Öffnung aufweist, durch welche das zweite freie Stromschienenende in die Verbindungsvorrichtung eingeführt ist, und die zweite Stromschiene einen zweiten innenliegenden Abschnitt aufweist, der sich vom zweiten freien Stromschienenende bis zur zweiten Öffnung erstreckt.

Bei dieser alternativen Ausgestaltung kann vorgesehen sein, dass einer der innenliegenden Abschnitte zwischen dem anderen der innenliegenden Abschnitte und einer Wand des Aufnahmeabschnitts angeordnet ist, wobei die Verbindungsvorrichtung ein Rückstellelement aufweist, welches den anderen der innenliegenden Abschnitte berührt, welches die elastische Verformung aufweist und welches die Rückstellkraft derart ausübt, dass der eine der innenliegenden Abschnitte zwischen dem anderen der innenliegenden Abschnitte und der Wand gehaltert ist.

Bei der alternativen Ausgestaltung kann vorgesehen sein, dass die erste Öffnung und die zweite Öffnung derart relativ zueinander angeordnet sind, dass der erste innenliegende Abschnitt winklig, insbesondere rechtwinklig, zum zweiten innenliegenden Abschnitt verläuft. Die winklige Anordnung vermeidet - je nach Anordnung von Stromrichter und elektrischer Maschine zueinander - insbesondere zusätzliche Biegungen in den Stromschienen.

Es ist bei der alternativen Ausgestaltung aber auch möglich, dass die erste Öffnung und die zweite Öffnung derart relativ zueinander angeordnet sind, dass der erste innenliegende Abschnitt und der zweite innenliegende Abschnitt entlang einer gedachten Linie verlaufen. Dabei ist es möglich, dass die erste Öffnung und die zweite Öffnung derart relativ zueinander angeordnet sind, dass der erste innenliegende Abschnitt und der zweite innenliegende Abschnitt innerhalb des Aufnahmeabschnitts auf Stoß liegen. Alternativ oder zusätzlich kann die Verbindungsvorrichtung zwei Rückstellelemente aufweist, welche die elastische Verformung aufweisen und welche die Rückstellkraft jeweils auf einen der innenliegenden Abschnitte ausüben.

Es ist ferner möglich, dass die Verbindungsvorrichtung einen zweiten Aufnahmeabschnitt, in den das zweite freie Stromschienenende eingeführt ist, und für jeden Aufnahmeabschnitt ein Rückstellelement aufweist, welches die elastische Verformung aufweist und die Rückstellkraft auf den in dem Aufnahmeabschnitt angeordneten innenliegenden Abschnitt ausübt. Die Aufnahmeabschnitte können dann elektrisch leitfähig aneinander befestigt sein. Dies kann durch Fügen, bevorzugt durch Crimpen, erfolgen.

Allgemein wird es bevorzugt, wenn die Verbindungsvorrichtung eine elektrisch isolierende Umhausung aufweist, die den Aufnahmeabschnitt oder die Aufnahmeabschnitte umgibt und durch ein Spitzgussmaterial ausgebildet ist. Das Spritzgussmaterial kann ein elektrisch isolierender Thermoplast sein.

Bei dem erfindungsgemäßen Antrieb kann mit Vorteil ferner vorgesehen sein, dass jede Stromscheine eine Ausnehmung, insbesondere eine Nut oder ein Durchgangsloch, aufweist und die Verbindungsvorrichtung ein Rastelement, das in den Ausnehmungen einer jeweiligen Stromschiene verrastet ist, oder zwei Rastelemente, die jeweils in der Ausnehmung einer der Stromschienen verrastet sind, aufweist. Ein derartiges Rastelement ermöglicht nicht nur eine zusätzliche Stabilität der Verbindungsvorrichtung, weil die Stromschiene nur mit großer Kraft aus der Verbindungsvorrichtung lösbar ist. Es gibt einem Werker, der den Antrieb montiert, auch eine akustische und/oder haptische Rückmeldung, wenn die Stromschienen korrekt in die Verbindungsvorrichtung eingeführt sind.

Das Rastelement kann durch die Zunge ausgebildet sein. Der Zungenendabschnitt kann auch als Rastelement dienen.

Der erfindungsgemäße Antrieb kann ferner ein Gehäuse aufweisen, das einen ersten Aufnahmeraum, in dem die elektrische Maschine angeordnet ist, und einen durch eine Wand des Gehäuses vom ersten Aufnahmeraum getrennten zweiten Aufnahmeraum, in dem der Stromrichter angeordnet ist, aufweist. In bevorzugter Ausgestaltung ist vorgesehen, dass die erste Stromschiene durch eine den ersten Aufnahmeraum schließende Abdeckung des Gehäuses hindurchgeführt ist und die Verbindungsvorrichtung in einer Wand des zweiten Aufnahmeraums angeordnet ist. Alternativ kann die Verbindungsvorrichtung in der Wand angeordnet sein. Die Verbindungsvorrichtung kann dabei ein Dichtmittel aufweisen, welches die Verbindungsvorrichtung gegenüber der Wand abdichtet. Das Dichtmittel kann beispielsweise an der Umhausung angeordnet sein.

Weitere Vorteile und Einzelheiten der vorliegenden Erfindung ergeben sich aus den im Folgenden beschriebenen Ausführungsbeispielen sowie anhand der Zeichnungen. Diese sind schematische Darstellungen und zeigen:
- Fig. 1: ein Blockschaltbild eines ersten Ausführungsbeispiels des erfindungsgemäßen elektrischen Antriebs;
- Fig. 2 u. 3: jeweils eine perspektivische Ansicht der Verbindungsvorrichtung gemäß dem ersten Ausführungsbeispiel;
- Fig. 4: eine Seitenansicht der Verbindungsvorrichtung gemäß dem ersten Ausführungsbeispiel;
- Fig. 5: eine Frontalansicht der Verbindungsvorrichtung gemäß dem ersten Ausführungsbeispiel;
- Fig. 6: eine Prinzipskizze der Basisfläche gemäß dem ersten Ausführungsbeispiel;
- Fig. 7: eine schematische Teildarstellung des elektrischen Antriebs gemäß dem ersten Ausführungsbeispiel;
- Fig. 8: eine Prinzipskizze der Verbindungsvorrichtung gemäß einem zweiten Ausführungsbeispiel des erfindungsgemäßen elektrischen Antriebs;
- Fig. 9: eine Prinzipskizze der Verbindungsvorrichtung gemäß einem dritten Ausführungsbeispiel des erfindungsgemäßen elektrischen Antriebs;
- Fig. 10: eine Prinzipskizze der Verbindungsvorrichtung gemäß einem vierten Ausführungsbeispiel des erfindungsgemäßen elektrischen Antriebs; und
- Fig. 11: eine schematische Teildarstellung eines fünften Ausführungsbeispiels des erfindungsgemäßen elektrischen Antriebs.

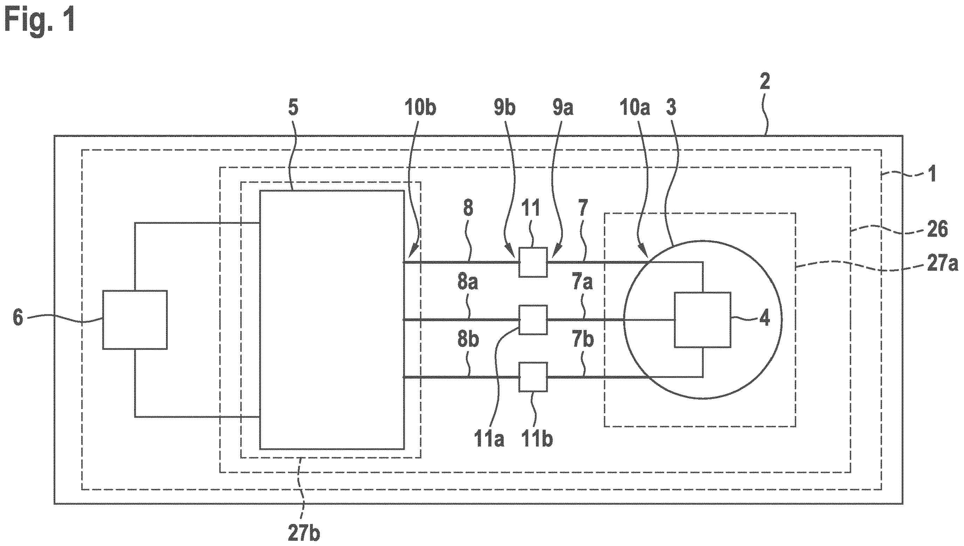

Fig. 1 ist ein Blockschaltbild eines ersten Ausführungsbeispiels eines elektrischen Antriebs 1 für ein Fahrzeug 2.

Der Antrieb 1 weist eine elektrische Maschine 3 mit einer Statorwicklung 4 auf. Die elektrische Maschine 3 ist beispielsweise als permanent oder elektrisch erregte Synchronmaschine oder als Asynchronmaschine ausgestaltet.

Außerdem weist der Antrieb 1 einen Stromrichter 5 auf, der hier exemplarisch als Wechselrichter ausgebildet ist. Der Stromrichter 5 kann mithin eine von einer Batterie 6 des Antriebs 1 mit einer Nennspannung von beispielsweise 600 Volt bereitgestellte Gleichspannung in eine dreiphasige Wechselspannung zum Versorgen der elektrischen Maschine 3 wandeln.

Der Antrieb 1 weist ferner eine erste Stromschiene 7 und eine zweite Stromschiene 8 auf. Die erste Stromschiene 7 ist elektrisch leitfähig und mechanisch mit der Statorwicklung 4 verbunden und weist ein der elektrischen Maschine 3 abgewandtes erstes freies Stromschienenende 9a auf. Ein weiteres freies Stromschienenende 10a der ersten Stromschiene 7 ist elektrisch leitfähig und mechanisch mit der Statorwicklung 4 verbunden. Die zweite Stromschiene 8 ist elektrisch leitfähig und mechanisch mit dem Stromrichter 5 verbunden und weist ein dem Stromrichter 5 abgewandtes zweites freies Stromschienenende 9b auf. Ein weiteres freies Stromschienenende 10b der zweiten Stromschiene 8 ist elektrisch leitfähig und mechanisch mit dem Stromrichter 5 verbunden.

Der Antrieb 1 weist ferner eine Verbindungsvorrichtung 11 auf, innerhalb welcher das erste freie Stromschienenende 9a und das zweite freie Stromschienenende 9b angeordnet sind, sodass die Statorwicklung 4 und der Stromrichter 5 elektrisch leitfähig miteinander verbunden sind.

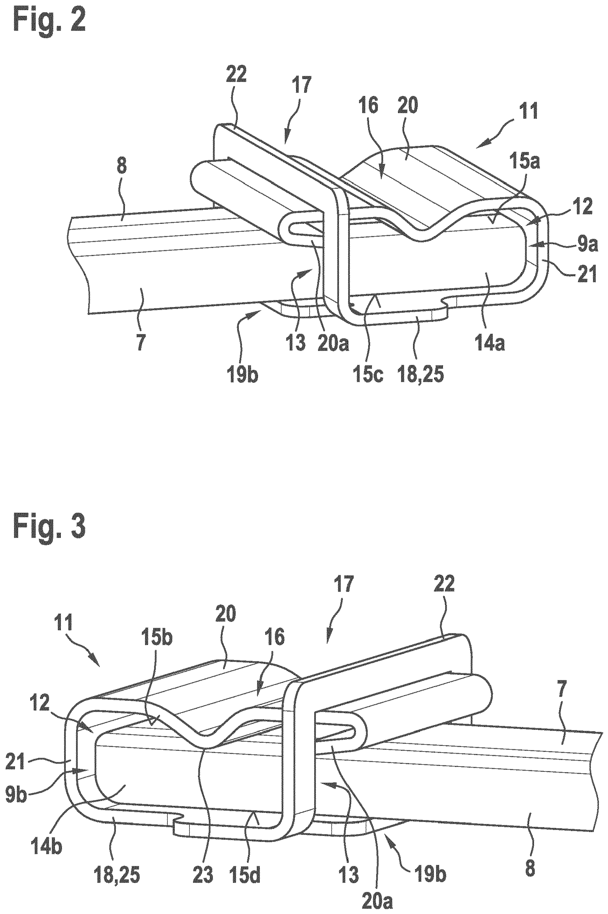

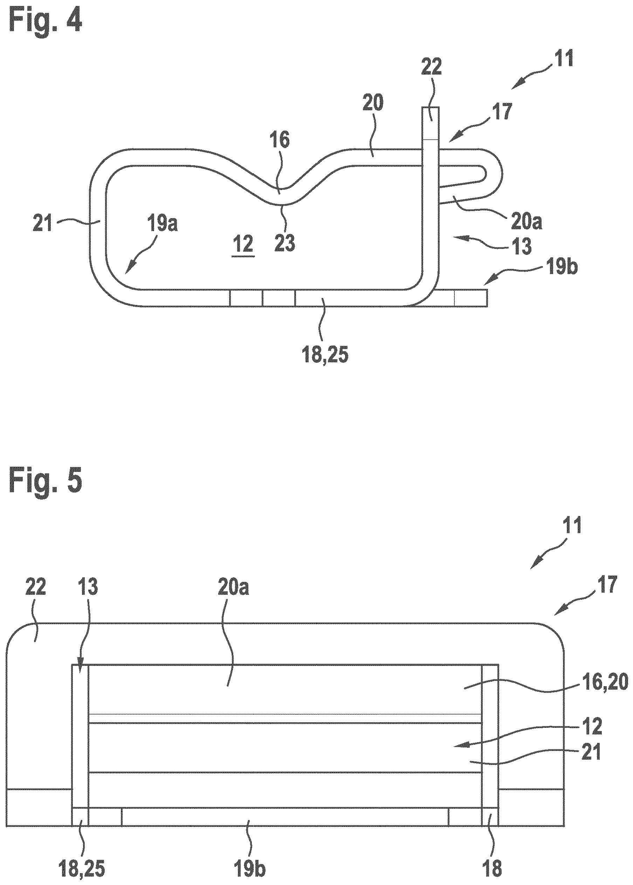

Fig. 2 bis Fig. 5 zeigen die Verbindungsvorrichtung 11 gemäß dem ersten Ausführungsbeispiel, wobei Fig. 2 und Fig. 3 jeweils eine perspektivische Ansicht mit den freien Stromschienenenden 9a, 9b sind, Fig. 4 eine Seitenansicht ist und Fig. 5 eine Frontalansicht ist.

Das erste freie Stromschienenende 9a und das zweite freie Stromschienenende 9b sind mittels einer durch elastische Verformung der Verbindungsvorrichtung 11 ausgeübten Rückstellkraft innerhalb der Verbindungsvorrichtung 11 gehaltert. Beim ersten Ausführungsbeispiel weist die Verbindungsvorrichtung 11 dazu einen Aufnahmeabschnitt 12 und eine Öffnung 13 auf. Durch die Öffnung 13 sind das erste freie Stromschienenende 9a und das zweite Stromschienenende 9b in den Aufnahmeabschnitt 12 eingeführt, sodass sich ein erster innenliegender Abschnitt 14a der ersten Stromschiene 7 und ein zweiter innenliegender Abschnitt 14b (in Fig. 2 verdeckt) der zweiten Stromschiene 8 vom jeweiligen freien Stromschienenende 9a, 9b bis zur Öffnung 13 erstrecken. Innerhalb des Aufnahmeabschnitts 12 verlaufen die innenliegenden Abschnitte 14a, 14b parallel. Der Aufnahmeabschnitt 12 kann als gemeinsamer Aufnahmeabschnitt erachtet werden.

Ferner weisen der erste innenliegende Abschnitt 14a eine erste Seite 15a und der zweite innenliegende Abschnitt 14b eine zweite Seite 15b auf. Die erste und die zweite Seite 15a, 15b spannen erste Ebene auf. Die Verbindungsvorrichtung 11 weist ferner ein erstes Rückstellelement 16 auf, welches die erste Seite 15a und die zweite Seite 15b berührt. Das erste Rückstellelement 16 weist die elastische Verformung auf und übt die Rückstellkraft auf den ersten innenliegenden Abschnitt 14a und den zweiten innenliegenden Abschnitt 14b aus. Im vorliegenden Ausführungsbeispiel ist das erste Rückstellelement 16 somit ein gemeinsames Rückstellelement für die innenliegenden Abschnitte 14a, 14b.

Im Detail ist gemäß dem ersten Ausführungsbeispiel vorgesehen, dass die Verbindungsvorrichtung eine Klemme 17 aufweist. Die Klemme 17 weist eine Basisfläche 18 mit einem ersten Basisflächenende 19a und einem zweiten Basisflächenende 19b, eine Zunge 20, eine Umbiegung 21 und eine Lasche 22 auf. Die Zunge 20 bildet das erste Rückstellelement 16 aus. Dazu ist durch Biegen eine Nase 23, welche die erste Seite 15a und die zweite Seite 15b berührt, ausgebildet. Die Umbiegung 21 verbindet das erste Basisflächenende 19a mit der Zunge 20. Die Lasche 22 ist am zweiten Basisflächenende 19b aufgebogen. Die Zunge 20 ist durch die Lasche 22 durchgeführt. Die Lasche 22 bildet somit ein Widerlager für die die Rückstellkraft ausübende Zunge 20.

Außerdem begrenzen die Lasche 22, die Zunge 20 und die Basisfläche 18 die Öffnung 13. Die Basisfläche 18, die Zunge 20 und die Umbiegung 21 begrenzen den Aufnahmeabschnitt 12.

Von der Umbiegung 21 aus gesehen jenseits der Öffnung 13 weist die Zunge 20 ferner einen Zungenendabschnitt 20a auf, der zu den Stromschienen 7, 8 hingebogen ist und dazu eingerichtet ist, sich bei einem Herausziehen der Stromschienen 7, 8 aus der Verbindungsvorrichtung 11 in die Stromschienen 7, 8 einzuschneiden und dadurch ein Herausziehen der Stromschienen aus der Verbindungsvorrichtung zu hemmen. Alternativ kann in den Stromschienen 7, 8 eine sich quer zu ihrer Stromführungsrichtung erstreckende Nut auf der ersten Seite 15a und der zweiten Seite 15b vorgesehen sein. In diese Nut kann der Zungenendabschnitt 20a eingreifen und so ein Rastelement ausbilden, sodass ein Werker, der die Stromschienen 7, 8 in die Verbindungsvorrichtung 11 einführt, eine haptische und akustische Rückmeldung über den korrekten Sitz der Stromschienen 7, 8 in der Verbindungsvorrichtung 11 erhält.

Der Zungenendabschnitt 20a kann außerdem auch zusätzlich zum Rückstellelement 16 die Rückstellkraft ausüben und die elastische Verformung aufweisen. Der Zungenendabschnitt 20a kann insoweit auch als weiteres Rückstellelement aufgefasst werden. Dadurch kann eine zusätzliche Stabilisierung der Stromschienen 7, 8 erzielt werden. Insbesondere kann ein Verkippen der Stromschienen 7, 8 und ein daraus resultierender Kontaktverlust vermieden werden.

Wie ferner Fig. 2 und Fig. 3 zu entnehmen ist, weisen der erste innenliegende Abschnitt 14a eine dritte Seite 15c und der zweite innenliegende Abschnitt 14b eine vierte Seite 15d auf, die zusammen eine zu der ersten Ebene parallele zweite Ebene aufspannen. Die Verbindungsvorrichtung weist ein zweites Rückstellelement 25 auf, welches eine Rückstellkraft auf die dritte Seite 15c und die vierte Seite 15d ausübt, um eine elektrische Kontaktfläche mit der dritten Seite und der vierten Seite herzustellen. Das zweite Rückstellelement 25 übt die Rückstellkraft auf die dritte Seite 15c und die vierte Seite 15d aus. Dabei ist das zweite Rückstellelement 25 durch die Basisfläche 18 ausgebildet.

Zu beachten ist, dass Fig. 4 und Fig. 5 die Verbindungsvorrichtung 11 bzw. die Klemme 17 in ihrer montierten Stellung, in der die Stromschienenenden 9a, 9b vollständig in sie eingeführt sind, zeigen, und die Stromschienen lediglich zu Darstellungszwecken ausgeblendet wurden.

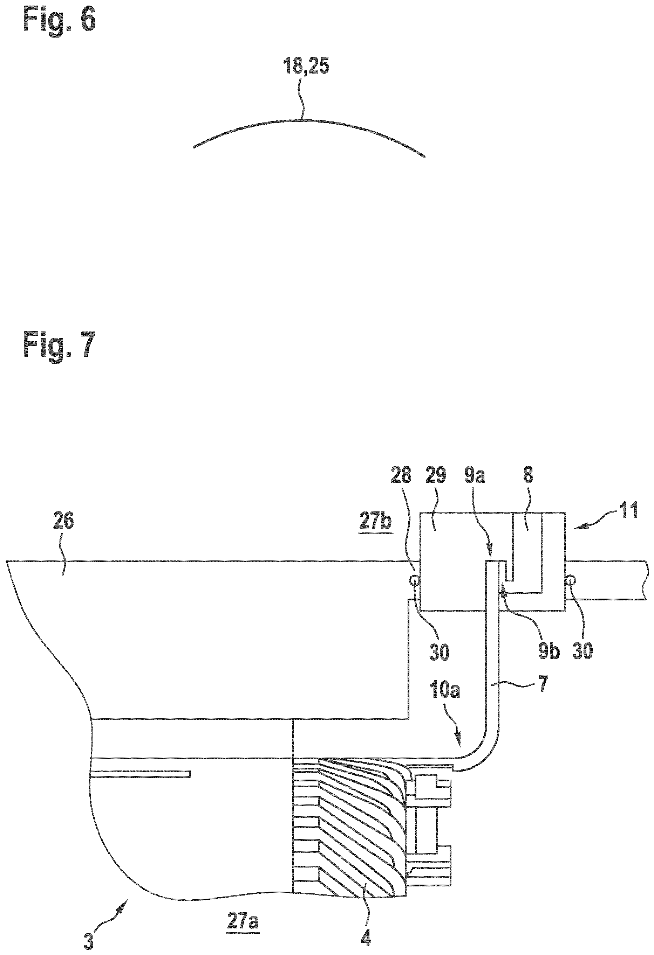

Fig. 6 ist eine Prinzipskizze der Basisfläche 18 in einer unmontierten Stellung der Verbindungsvorrichtung 11 bzw. der Klemme 17. In der unmontierten Stellung sind die Stromschienenende 9a, 9b nicht in den Aufnahmeabschnitt 12 eingeführt. Ersichtlich ist die Basisfläche 18 in der unmontierten Stellung aufgewölbt, sodass sie beim Einführen der Stromschienen 9a, 9b zusammen mit dem ersten Rückstellelement 16 und dem Rastelement 24 elastisch verformt wird, um in der montierten Stellung, in der das zweite Rückstellelement 25 im Wesentlichen gerade verläuft bzw. weniger als in der unmontierten Stellung gewölbt ist, die Rückstellkraft auszuüben.

Obwohl es in den Fig. 1 bis 6 nicht aus Gründen der Übersichtlichkeit nicht dargestellt ist, weist die Verbindungsvorrichtung 11 ferner eine elektrisch isolierende Umhausung 29 (siehe Fig. 7) auf, die den Aufnahmeabschnitt 12 umgibt und durch ein Spitzgussmaterial ausgebildet ist.

Wieder mit Bezug zu Fig. 1 weist der Antrieb 1 ferner ein Gehäuse 26 auf, welches einen ersten Aufnahmeraum 27a und einen zweiten Aufnahmeraum 27b aufweist. Im ersten Aufnahmeraum 27a ist die elektrische Maschine 3 angeordnet. Im zweiten Aufnahmeraum 27b ist der Stromrichter 5 angeordnet.

Fig. 7 ist eine schematische Teildarstellung des elektrischen Antriebs 1 gemäß dem ersten Ausführungsbeispiel und zeigt eine Wand 28 des Gehäuses 26, welche die Aufnahmeräume 27a, 27b voneinander trennt. Ersichtlich ist die Verbindungsvorrichtung 11 in der Wand 28 angeordnet. An der Umhausung 29 ist ferner eine Dichtung 30, zum Beispiel ein O-Ring, angeordnet, welche die Verbindungsvorrichtung 11 gegenüber der Wand 28 abdichtet.

Wieder mit Bezug zu Fig. 1 kann der elektrische Antrieb weitere erste Stromschienen 7a, 7b, weitere zweite Stromschienen 8a, 8b und weitere Verbindungsvorrichtung 11a, 11b, welche die weiteren ersten Stromschienen 7a, 7b und die weiteren zweiten Stromschienen 8a, 8b verbinden, aufweisen. Sämtliche Ausführungen zu den Stromschienen 7, 8 und der Verbindungsvorrichtung 11 lassen sich dabei auf die weiteren ersten Stromschienen 7a, 7b, die weiteren zweiten Stromschienen 8a, 8b und weitere Verbindungsvorrichtungen 11a, 11b übertragen. Typischerweise ist für jede Phase des Stromrichters 5 bzw. jeden Strang der elektrischen Maschine 3 eine erste Stromschiene 7, 7a, 7b, eine zweite Stromschiene 8, 8a, 8b und eine Verbindungsvorrichtung 11, 11a, 11b vorgesehen.

Gemäß einem weiteren Ausführungsbeispiel kann in der Umbiegung 21 eine Ausnehmung ausgebildet sein, die Durchführung der Stromschienenenden 9a, 9b ermöglicht. Dadurch können die Übergänge von der Basisfläche 18 in die Umbiegung 21 bzw. von der Umbiegung 21 in die Zunge 20 mit größeren Biegeradien ausgebildet werden, ohne eine Kollision der Stromschienenenden 9a, 9b mit den Biegeradien zu verursachen.

Im Folgenden werden weitere Ausführungsbeispiele des elektrischen Antriebs 1 beschrieben, auf die sich die Ausführungen zum ersten Ausführungsbeispiel übertragen lassen, soweit nicht Abweichendes beschrieben wird. Dabei sind gleiche oder gleichwirkende Komponenten mit identischen Bezugszeichen versehen. Bei diesen Ausführungsbeispielen ist typischerweise keine Klemme 17 vorgesehen.

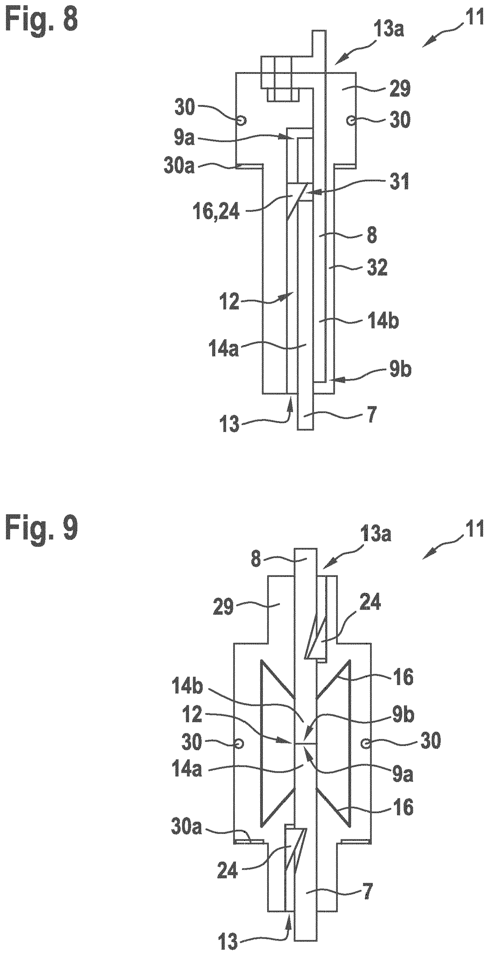

Fig. 8 ist eine Prinzipskizze der Verbindungsvorrichtung 11 gemäß einem zweiten Ausführungsbeispiel eines elektrischen Antriebs 1.

Beim zweiten Ausführungsbeispiel ist eine von der ersten Öffnung 13 getrennte zweite Öffnung 13a vorgesehen. Durch die zweite Öffnung 13a ist das zweite freie Stromschienenende 9b in die Verbindungsvorrichtung 11 eingeführt. Der zweite innenliegende Abschnitt 14b erstreckt sich hier von der zweiten Öffnung 13a bis zum zweiten Stromschienenende 9b.

Der zweite innenliegende Abschnitt 14b ist zwischen dem ersten innenliegenden Abschnitt 14a und einer Wand 32 des Aufnahmeabschnitts 12 angeordnet ist. Das Rückstellelement 16 berührt den ersten innenliegenden Abschnitt 14a, weist die elastische Verformung auf und übt die Rückstellkraft derart aus, dass der zweite innenliegende Abschnitt 14b zwischen dem ersten innenliegenden Abschnitt 14a und der Wand 32 gehaltert ist. Auch hier verlaufen die innenliegenden Abschnitte 14a, 14b parallel.

Beim zweiten Ausführungsbeispiel bildet das Rückstellelement 16 auch das Rastelement 24 aus. Anstelle der Nut ist hier ein Durchgangsloch 31 im ersten innenliegenden Abschnitt 14a vorgesehen.

Fig. 8 zeigt ferner eine weitere Dichtung 30a, die um die erste Öffnung 30 herum angeordnet ist.

Selbstverständlich kann alternativ auch erste innenliegende Abschnitt 14a zwischen dem zweiten innenliegenden Abschnitt 14b und der Wand 32 angeordnet sind.

Fig. 9 ist eine Prinzipskizze der Verbindungsvorrichtung 11 gemäß einem dritten Ausführungsbeispiel des erfindungsgemäßen elektrischen Antriebs 1.

Auch beim dritten Ausführungsbeispiel weist die Verbindungsvorrichtung 11 die von der ersten Öffnung 13 getrennte zweite Öffnung 13a auf, durch welche das zweite freie Stromschienenende 9b in die Verbindungsvorrichtung eingeführt ist. Der zweite innenliegende Abschnitt 14b erstreckt sich ebenso vom zweiten freien Stromschienenende 9b bis zur zweiten Öffnung 13a. Ebenso ist die weitere Dichtung 30a vorgesehen.

Die erste Öffnung 13 und die zweite Öffnung 13a sind derart relativ zueinander angeordnet sind, dass der erste innenliegende Abschnitt 14a und der zweite innenliegende Abschnitt 14b entlang einer gedachten Linie verlaufen und innerhalb des Aufnahmeabschnitts 12 auf Stoß liegen. Der Aufnahmeabschnitt 12 ist hier ein gemeinsamer Aufnahmeabschnitt für beide innenliegenden Abschnitte 14a, 14b.

Beim dritten Ausführungsbeispiel sind zwei Rückstellelemente 16 vorgesehen, welche die Rückstellkraft jeweils auf einen der innenliegenden Abschnitte 14a, 14b ausüben. Ebenso sind zwei Rastelement 24 vorgesehen, von denen eines in der Nut der ersten Stromschiene 7 und das andere in der Nut der zweiten Stromschiene 8 verrastet ist.

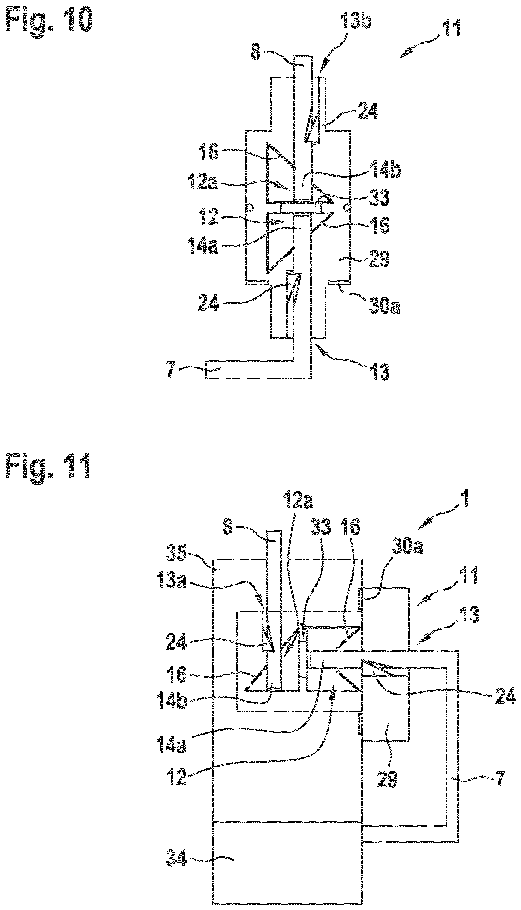

Fig. 10 ist eine Prinzipskizze der Verbindungsvorrichtung 11 gemäß einem vierten Ausführungsbeispiel des elektrischen Antriebs 1.

Das vierte Ausführungsbeispiel entspricht im Wesentlichen dem zweiten Ausführungsbeispiel, allerdings sind hier zwei Aufnahmeabschnitte 12, 12a vorgesehen.

Im ersten Aufnahmeabschnitt 12 ist der erste innenliegende Abschnitt 14a der ersten Stromschiene 7 angeordnet. Im zweiten Aufnahmeabschnitt 12a ist der zweite innenliegende Abschnitt 14b der zweiten Stromschiene 8 angeordnet. Jeder Aufnahmeabschnitt 12, 12a weist hier ein Rückstellelement 16 auf, welches die Rückstellkraft auf das im Aufnahmeabschnitt 12, 12a angeordneten innenliegenden Abschnitt 14a, 14b ausübt. Die Aufnahmeabschnitte 12, 12a sind an einer Fügestelle 33 beispielsweise durch Crimpen elektrisch leitfähig aneinander befestigt.

Fig. 11 ist eine schematische Teildarstellung eines fünften Ausführungsbeispiels des erfindungsgemäßen elektrischen Antriebs.

Die Verbindungsvorrichtung 11 entspricht hier derjenigen des vierten Ausführungsbeispiels. Allerdings sind die erste Öffnung 13 und die zweite Öffnung 13a hier derart relativ zueinander angeordnet sind, dass der erste innenliegende Abschnitt 14a rechtwinklig zum zweiten innenliegenden Abschnitt 14b verläuft.

Beim fünften Ausführungsbeispiel ist die erste Stromschiene 7 durch eine den ersten Aufnahmeraum 27a schließende Abdeckung 34 des Gehäuses 26 hindurchgeführt. Die Verbindungsvorrichtung 11 ist in einer Wand 35 des zweiten Aufnahmeraums 27b angeordnet. Die Dichtung 30a liegt hier flächig auf der Wand 35 auf.

Auch beim zweiten bis fünften Ausführungsbeispiel ist die Umhausung 29 aus einem Spritzgussmaterial, insbesondere einem thermoplastischen Kunststoff, bzw. durch Umspritzen ausgebildet.

Bei allen Ausführungsbeispielen kann alternativ zur Nut die Durchgangsöffnung oder allgemein eine Ausnehmung vorgesehen sein.

## Patentansprüche

1. Elektrischer Antrieb (1) für ein Fahrzeug (2), aufweisend:
- eine elektrische Maschine (3) mit einer Statorwicklung (4);
- einen Stromrichter (5);
- eine erste Stromschiene (7), die elektrisch leitfähig mit der Statorwicklung (4) verbunden ist und ein der elektrischen Maschine (3) abgewandtes erstes freies Stromschienenende (9a) aufweist;
- eine zweite Stromschiene (8), die elektrisch leitfähig dem Stromrichter (5) verbunden ist und ein dem Stromrichter (5) abgewandtes zweites freies Stromschienenende (9b) aufweist; und
- eine Verbindungsvorrichtung (11), innerhalb welcher das erste freie Stromschienenende (9a) und das zweite freie Stromschienenende (9b) angeordnet sind, sodass die Statorwicklung (4) und der Stromrichter (5) elektrisch leitfähig miteinander verbunden sind;
**dadurch gekennzeichnet, dass**
das erste freie Stromschienenende (9a) und das zweite freie Stromschienenende (9b) mittels einer durch elastische Verformung der Verbindungsvorrichtung (11) ausgeübten Rückstellkraft innerhalb der Verbindungsvorrichtung (11) gehaltert sind.

2. Elektrischer Antrieb nach Anspruch 1, wobei
die Verbindungsvorrichtung einen Aufnahmeabschnitt (12) und eine Öffnung (13), durch welche das erste freie Stromschienenende (9a) in den Aufnahmeabschnitt (12a) eingeführt ist, aufweist und die erste Stromschiene (7) einen ersten innenliegenden Abschnitt (14a) aufweist, der sich vom ersten freien Stromschienenende (9a) bis zur Öffnung (13) erstreckt.

3. Elektrischer Antrieb nach Anspruch 2, wobei
das zweite freie Stromschienenende (9b) durch die Öffnung (13) in den Aufnahmeabschnitt (12) eingeführt ist und die zweite Stromschiene (8) einen zweiten innenliegenden Abschnitt (14b) aufweist, der sich vom zweiten freien Stromschienenende (9b) bis zur Öffnung (13) erstreckt, wobei der erste innenliegende Abschnitt (14a) und der zweite innenliegende Abschnitt (14b) im Aufnahmeabschnitt (12) parallel zueinander verlaufen.

4. Elektrischer Antrieb nach Anspruch 3, wobei
der erste innenliegende Abschnitt (14a) eine erste Seite (15a) und der zweite innenliegende Abschnitt (14b) eine zweite Seite (15b), die mit der ersten Seite (15a) eine erste Ebene aufspannt, aufweist, wobei die Verbindungsvorrichtung (11) ein Rückstellelement (16) aufweist, welches die erste Seite (15a) und die zweite Seite (15b) berührt, welches die elastische Verformung aufweist und welches die Rückstellkraft auf den ersten innenliegenden Abschnitt (14a) und den zweiten innenliegenden Abschnitt (14b) ausübt.

5. Elektrischer Antrieb nach Anspruch 4, wobei
die Verbindungsvorrichtung (11) eine Klemme (17) aufweist, welche
- eine Basisfläche (18) mit einem ersten Basisflächenende (19a) und einem zweiten Basisflächenende (19b),
- eine Zunge (20), die das Rückstellelement (16) umfasst,
- eine Umbiegung (21), die das erste Basisflächenende (19a) mit der Zunge (20) verbindet, und
- eine Lasche (22), die am zweiten Basisflächenende (19b) aufgebogen ist, durch welche die Zunge (20) durchgeführt ist und welche zusammen mit der Basisfläche (18) und der Zunge (20) die Öffnung (13) begrenzt,
aufweist, wobei die Basisfläche (18), die Zunge (20) und die Umbiegung (12) den Aufnahmeabschnitt (12) begrenzen.

6. Elektrischer Antrieb nach Anspruch 4 oder 5, wobei
der erste innenliegende Abschnitt (14a) eine dritte Seite (15c) aufweist und der zweite innenliegende Abschnitt (14b) eine vierte Seite (15d), die mit der dritten Seite (15c) eine zu der ersten Ebene parallele zweite Ebene aufspannt, aufweist, wobei die Verbindungsvorrichtung (11) ein weiteres Rückstellelement (25) aufweist, welches eine Rückstellkraft auf die dritte Seite (15c) und die vierte Seite (15d) ausübt, um eine elektrische Kontaktfläche mit der dritten Seite (15c) und der vierten Seite (15d) herzustellen.

7. Elektrischer Antrieb nach Anspruch 2, wobei
die Verbindungsvorrichtung (11) eine von der ersten Öffnung (13) getrennte zweite Öffnung (13a) aufweist, durch welche das zweite freie Stromschienenende (9b) in die Verbindungsvorrichtung (11) eingeführt ist, und die zweite Stromschiene (8) einen zweiten innenliegenden Abschnitt (14b) aufweist, der sich vom zweiten freien Stromschienenende (9b) bis zur zweiten Öffnung (13a) erstreckt.

8. Elektrischer Antrieb nach Anspruch 7, wobei
einer der innenliegenden Abschnitte (14b) zwischen dem anderen der innenliegenden Abschnitte (14a) und einer Wand (32) des Aufnahmeabschnitts (12) angeordnet ist, wobei die Verbindungsvorrichtung (11) ein Rückstellelement (16) aufweist, welches den anderen der innenliegenden Abschnitte (14a) berührt, welches die elastische Verformung aufweist und welches die Rückstellkraft derart ausübt, dass der eine der innenliegenden Abschnitte (14b) zwischen dem anderen der innenliegenden Abschnitte (14a) und der Wand (32) gehaltert ist.

9. Elektrischer Antrieb nach Anspruch 7, wobei
die erste Öffnung (13) und die zweite Öffnung (13a) derart relativ zueinander angeordnet sind, dass der erste innenliegende Abschnitt (14a) winklig, insbesondere rechtwinklig, zum zweiten innenliegenden Abschnitt (14b) verläuft.

10. Elektrischer Antrieb nach Anspruch 7, wobei
die erste Öffnung (13) und die zweite Öffnung (13a) derart relativ zueinander angeordnet sind, dass der erste innenliegende Abschnitt (14a) und der zweite innenliegende Abschnitt (14b) entlang einer gedachten Linie verlaufen.

11. Elektrischer Antrieb nach Anspruch 10, wobei
- die erste Öffnung (13) und die zweite Öffnung (13a) derart relativ zueinander angeordnet sind, dass der erste innenliegende Abschnitt (14a) und der zweite innenliegende Abschnitt (14b) innerhalb des Aufnahmeabschnitts auf Stoß liegen und/oder
- die Verbindungsvorrichtung (11) zwei Rückstellelemente (16) aufweist, welche die elastische Verformung aufweisen und welche die Rückstellkraft jeweils auf einen der innenliegenden Abschnitte (14a, 14b) ausüben.

12. Elektrischer Antrieb nach Anspruch 9 oder 10, wobei
die Verbindungsvorrichtung (11) einen zweiten Aufnahmeabschnitt (12a), in den das zweite freie Stromschienenende (9b) eingeführt ist, und für jeden Aufnahmeabschnitt (12, 12a) ein Rückstellelement (16) aufweist, welches die elastische Verformung aufweist und die Rückstellkraft auf den in dem Aufnahmeabschnitt (12, 12a) angeordneten innenliegenden Abschnitt (14a, 14b) ausübt, wobei die Aufnahmeabschnitte (12, 12a), bevorzugt durch Fügen, besonders bevorzugt durch Crimpen, elektrisch leitfähig aneinander befestigt sind.

13. Elektrischer Antrieb nach einem der Ansprüche 2 bis 12, wobei
die Verbindungsvorrichtung (11) eine elektrisch isolierende Umhausung (29) aufweist, die den Aufnahmeabschnitt (12) oder die Aufnahmeabschnitte (12, 12a) umgibt und durch ein Spitzgussmaterial ausgebildet ist.

14. Elektrischer Antrieb nach einem der vorhergehenden Ansprüche, wobei
eine oder jede Stromscheine (7, 8) eine Ausnehmung, insbesondere eine Nut oder ein Durchgangsloch (31), aufweist und die Verbindungsvorrichtung (11) ein Rastelement (24), das in den Ausnehmungen einer jeweiligen Stromschiene (7, 8) verrastet ist, oder zwei Rastelemente (24), die jeweils in der Ausnehmung einer der Stromschienen (7, 8) verrastet sind, aufweist.

15. Elektrischer Antrieb nach einem der vorhergehenden Ansprüche, ferner aufweisend
ein Gehäuse (26), das einen ersten Aufnahmeraum (27a), in dem die elektrische Maschine (3) angeordnet ist, und einen durch eine Wand (28) des Gehäuses (26) vom ersten Aufnahmeraum (27a) getrennten zweiten Aufnahmeraum (27b), in dem der Stromrichter (5) angeordnet ist, aufweist, wobei
- die erste Stromschiene (7) durch eine den ersten Aufnahmeraum (27a) schließende Abdeckung (34) des Gehäuses (26) hindurchgeführt ist und die Verbindungsvorrichtung (11) in einer Wand (35) des zweiten Aufnahmeraums (27b) angeordnet ist oder
- die Verbindungsvorrichtung (11) in der Wand (28) angeordnet ist.
